Europäisches Patentamt

European Patent Office

Office européen des brevets

(11) Veröffentlichungsnummer: **0 356 575**
**A2**

## (12) EUROPÄISCHE PATENTANMELDUNG

(21) Anmeldenummer: 88116482.6

(22) Anmeldetag: 05.10.88

(51) Int. Cl.5: **B23B 31/20**

(30) Priorität: 02.09.88 DE 3829886

(43) Veröffentlichungstag der Anmeldung:
07.03.90 Patentblatt 90/10

(84) Benannte Vertragsstaaten:
**AT BE CH DE ES FR GB GR IT LI LU NL SE**

(71) Anmelder: **Wirth, Robert**
**Schallerhofer Strasse 92**
**D-8520 Erlangen(DE)**

Anmelder: **Zinner, Karl**
**Uehlfelder Strasse 21**
**D-8500 Nürnberg 80(DE)**

(72) Erfinder: **Wirth, Robert**
**Schallerhofer Strasse 92**
**D-8520 Erlangen(DE)**
Erfinder: **Zinner, Karl**
**Uehlfelder Strasse 21**
**D-8500 Nürnberg 80(DE)**

(74) Vertreter: **Matschkur, Peter Dipl.-Phys. et al**
**Czowalla - Matschkur Patentanwälte Dr.**
**Kurt-Schumacher-Strasse 23**
**D-8500 Nürnberg 11(DE)**

(54) Spannvorrichtung für eine Drehmaschine.

(57) Spannvorrichtung zum Spannen eines Werkstük-kes an einer Drehmaschine, insbesondere NC-Drehmaschine, bei der eine geschlitzte Spannzange mit einer Stirnseite an einem Flansch eines Spindelstok-kes anliegt und über Konus von einer axial bewegbaren Spannhülse beaufschlagt ist und bei der an der Stirnseite Spannbacken eine Aufnahmebohrung begrenzen, die Schlitze sich weit über die Spannbak-ken hinaus erstrecken und sich an die Schlitze ein ungeschlitzter Ringbereich anschließt, wobei ein mit Abstand hinter den Spannbacken in der Spannzange angeordnetes Einsatzstück, das einen zur Aufnahme-bohrung koaxialen, vorzugsweise verstellbaren An-schlag für das Werkstück trägt, lösbar am ungeschlitzten Ringbereich befestigbar ist, indem das in ein Gegengewinde einschraubbare Einsatzstück sich mit einer radialen Stufe am der Stirnseite gegenüberliegenden Rückende der Spannzange abstützt.

FIG. 1

## Spannvorrichtung für eine Drehmaschine

Die Erfindung bezieht sich auf eine Spannvorrichtung zum Spannen eines Werkstücks an einer Drehmaschine, insbesondere NC-Drehmaschine, bei der eine geschlitzte Spannzange mit einer Stirnseite an einem Flansch eines Spindelstockes anliegt und über Konus von einer axial bewegbaren Spannhülse beaufschlagt ist und bei der an der Stirnseite Spannbacken eine Aufnahmebohrung begrenzen, die Schlitze sich weit über die Spannbacken hinaus erstrecken und sich an die Schlitze ein ungeschlitzter Ringbereich anschließt.

Bei einer auf dem Markt befindlichen Spannvorrichtung der vorstehend beschriebenen Art ist in der Spannzange der Raum hinter den Spannbacken frei, so daß sich ein Werkstück durch die Aufnahmebohrung ungehindert weit in die Spannzange hineinschieben läßt. Dies erschwert eine genaue axiale Positionierung des Werkstückes. Wenn eine solche Positionierung vorgesehen wird, so sollte sie leicht einzubauen und abzubauen sein und ohne Veränderung der Spannzange möglich sein, da Änderungen der Spannzange zu einer Änderung des Federverhaltens und der Festigkeit der Spannzange führen und im Hinblick auf das gehärtete Material häufig auch nur sehr schwierig vorzunehmen sind.

Der Erfindung liegt daher die Aufgabe zugrunde, eine Spannvorrichtung der eingangs genannten Art so auszugestalten, daß eine axiale Positionierung eines Werkstücks in einfach montierbarerer Weise ohne Beeinträchtigung der Spannzange gegeben ist.

Zur Lösung dieser Aufgabe ist erfindungsgemäß vorgesehen, daß ein mit Abstand hinter den Spannbacken in der Spannzange angeordnetes Einsatzstück, das einen zur Aufnahmebohrung koaxialen, vorzugsweise verstellbaren Anschlag für das Werkstück trägt, lösbar am ungeschlitzten Ringbereich befestigbar ist, indem das in ein Gegengewinde einschraubbare Einsatzstück sich mit einer radialen Stufe am der Stirnseite gegenüberliegenden Rückende der Spannzange abstützt.

Neben der grundsätzlichen Möglichkeit, daß die radiale Stufe und das Rückende im wesentlichen senkrecht zur Achse der Spannzange gerichtete ebene Flächen sind, hat es sich dabei als besonders vorteilhaft erwiesen, wenn die radiale Stufe eine eine konische Gegenfläche am Rückende umfassende und radial klemmend beaufschlagende konische Zentrierringnut aufweist. Durch diese Ausbildung ergibt sich nicht nur eine sehr einfache Zentrierung und eine Verklemmung derart, daß Verformungen der Spannzange in diesem Bereich vermieden sind, wie sie durch eine reine senkrecht zur Achse liegende Druckfläche bis zu einem gewissen Grad stattfinden können, sondern man hat darüber hinaus den ganz entscheidenden Vorteil, daß eine derartige Verklemmung erzielbar ist, daß eine erfindungsgemäße Spannvorrichtung wahlweise für Links-und Rechtslauf einsetzbar ist, indem nämlich die durch die Schrägen erzielbare Klemmkraft ein selbsttätiges Lösen, auch unter den zu erwartenden Kräften bei geänderter Drehrichtung, verhindert.

Um Mißverständnisse zu vermeiden, sei an dieser Stelle ausdrücklich darauf hingewiesen, daß mit der Bezeichnung "Konus" nicht etwa nur ausgedrückt ist, daß es sich um Kegelflächenabschnitte handelt, die noch dazu gleichartig an beiden Teilen ausgebildet sind. Für die erfindungsgemäße radiale Druckbeaufschlagung des Rückendes der Spannzange und die gewünschte Klemmwirkung zur Sicherung für Rechts-und Linkslauf könnten auch andere Arten von Flächenausbildungen vorgesehen sein, beispielsweise nur linienförmig sich aufeinander abstützende entgegengesetzte konvex gekrümmte Abschnitte oder aber auch unterschiedlich stark gekrümmte Abschnitte, von denen der konkave Abschnitt am Rückende der Spannzange einen größeren Krümmungsradius aufweist als der konvexe Gegen-"Konus"-Abschnitt an der radialen Stufe.

Im einfachsten Fall kann die lösbare Verbindung des Einsatzstücks derart erfolgen, daß das Einsatzstück unmittelbar in den mit einem Innengewinde versehenen ungeschlitzten Ringbereich einschraubbar ist.

Wenn man aber überhaupt keine Veränderungen an der Spannzange vornehmen will oder aber aufgrund der Härtung der Spannzange das Anbringen eines Gewindes zu große Schwierigkeiten bereitet, kann statt dessen auch das Einsatzstück in eine am ungeschlitzten Ringbereich befestigte Einsatzmutter eingeschraubt sein, wobei diese Einsatzmutter direkt innerhalb des ungeschlitzten Ringbereichs vorgesehen sein könnte.

Mit ganz besonderem Vorteil kann aber in Ausgestaltung der Erfindung eine Ausführung verwendet werden, bei der die Einsatzmutter mit radialen Nasen in die Schlitze der Spannzange ragt, die sich beim Einschrauben - unter Verklemmung des ungeschlitzten Ringbereichs zwischen den Nasen und der radialen Stufe - gegen der Grund der Schlitze legen.

Speziell bei dieser Ausführungsform, bei der ja die Einsatzmutter vor dem ungeschlitzten Ringbereich der Spannzange liegt, hat es sich als sehr günstig erwiesen, wenn, wie in weiterer Ausgestaltung der Erfindung vorgesehen sein kann, das Einsatzstück napfartig mit einem offenen Endstück und einem geschlossenen Ende ausgebildet mit dem offenen Endstück in das Einsatzgewinde, insbesondere also die Einsatzmutter, eingeschraubt ist und am geschlossenen Ende den Anschlag trägt. Bei lösbarer Anordnung der Ansätze, beispielsweise als in die Einsatzmutter einschraubbare Schrauben, ist die Montage dieser Einsatzmutter sehr einfach möglich. Größere Festigkeit und eine einfachere Fertigung ergeben sich jedoch, wenn die drei Nasen mit der Einsatzmutter einstückig sind. Um auch in diesem Fall eine einfache Montage zu gewährleisten, ist in Fortbildung der Erfindung vorgesehen, daß der Außendurchmesser der Einsatzmutter etwas geringer ist als der Durchmesser der Spannzange im ungeschlitzten Ringbereich und im anschließenden geschlitzten Bereich und daß zwei der Nasen jeweils mit einer Abschrägung zum Einschub der schräggestellten Einsatzmutter in den ungeschlitzten Ringbereich versehen sind.

Besonders zweckmäßig und vorteilhaft ist es, wenn das geschlossene Ende des Einsatzstückes außerhalb der Spannzange, hinter deren Rückende angeordnet ist. Die Stelle, an der der Anschlag festgelegt ist, ist möglichst weit nach hinten gerückt, um ein weites Einschieben des Werkstückes in die Spannzange zu ermöglichen.

Besonders zweckmäßig und vorteilhaft ist es sodann, wenn ein die Stufe bildender Endbereich des Einsatzstückes an der Außenseite axial verlaufende Eingriffsnuten aufweist. An diesen Eingriffsnuten greift ein Hakenschlüssel an, der dazu dient, das Einsatzstück fest einzuschrauben.

Besonders zweckmäßig und vorteilhaft ist weiterhin, wenn der Anschlag an einer Stange vorgesehen ist, die relativ zum napfartigen Einsatzstück axial verstellbar ist und an diesem mittels Feststellmutter festlegbar ist. Dies ist eine einfache Art, den Anschlag axial zu positionieren, um Werkstücke mit verschieden tiefem Einschub in die Spannzange festlegen zu können.

Besonders zweckmäßig und vorteilhaft ist es dabei, wenn die Stange in ein Gewinde im Grund am geschlossenen Ende des napfartigen Einsatzstückes eingeschraubt ist und eine gegen das Rückende drückende Kontermutter trägt. Diese verstellbare Festlegung der Stange ist weniger aufwendig.

Besonders zweckmäßig und vorteilhaft ist es andererseits, wenn die Stange in einer geschlitzten Hilfsspannzange sitzt, die über Konus am Grund des napfartigen Einsatzstückes abgestützt ist und eine gegen das Rückende drückende Spannmutter trägt. Bei dieser verstellbaren Festlegung liegt eine gewindefreie Stange vor.

Weitere Vorteile, Merkmale und Einzelheiten der Erfindung ergeben sich aus der nachfolgenden Beschreibung dreier Ausführungsbeispiele sowie anhand der Zeichnung. Dabei zeigen:

Fig. 1 eine teilweise geschnittene Seitenansicht einer erfindungsgemäßen Spannvorrichtung,

Fig. 2 eine Explosionsdarstellung der Einzelteile in Seitenansicht,

Fig. 3 eine vergrößerte Detailansicht des Bereichs III in Fig. 1,

Fig. 4 eine Stirnansicht der Einsatzmutter,

Fig. 5 eine der Fig. 2 entsprechende teilweise geschnittene Seitenansicht einer zweiten Ausführungsform einer erfindungsgemäßen Spannvorrichtung,

Fig. 6 eine auseinandergezogene Darstellung der einzelnen Bauteile der Spannvorrichtung nach Fig. 5,

Fig. 7 eine Detailansicht des Bereichs VII in Fig. 5, und

Fig. 8 einen Teilschnitt durch eine abgewandelte Ausführungsform einer erfindungsgemäßen Spannvorrichtung.

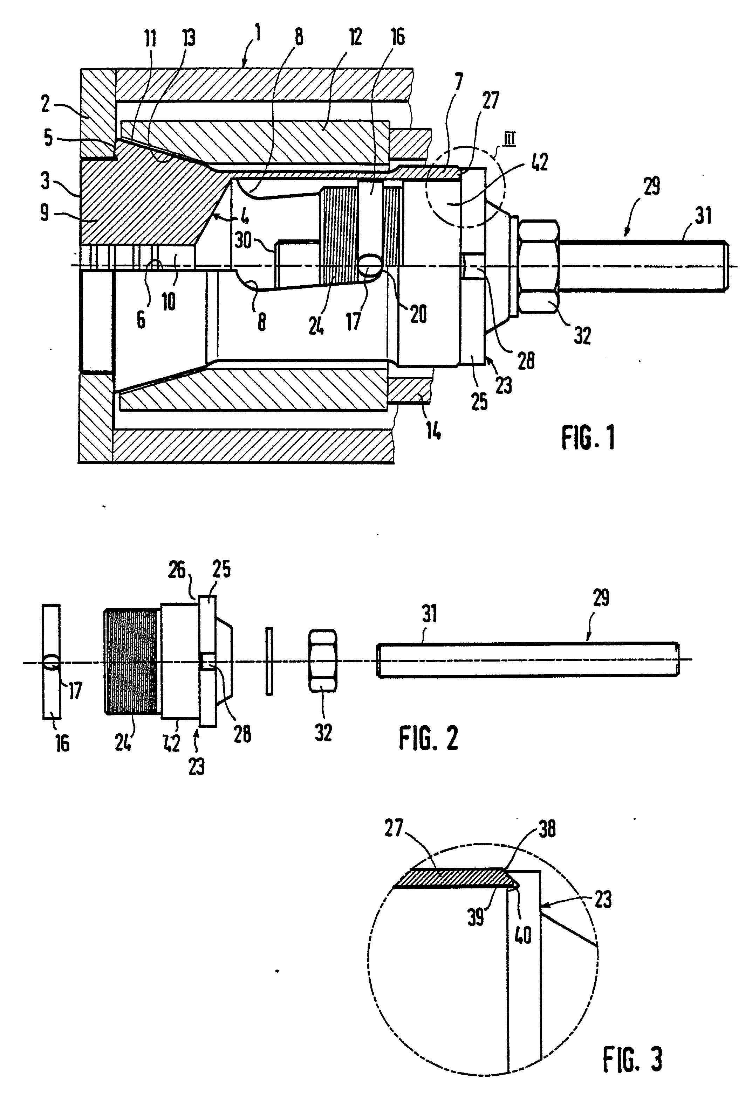

Die Spannvorrichtung gemäß den Figuren 1 bis 4 besitzt einen Spindelstock 1, der an einer nicht gezeigten NC-Drehmaschine sitzt und nach vorne einen radial einwärts ragenden Flansch 2 bildet. Gegen den Flansch 2 ist eine Stirnseite 3 einer Spannzange 4 gedrückt, wobei der Flansch in eine Ringausnehmung 5 an der Stirnseite eingreift. Die über ihre Länge gehöhlte Spannzange 4 ist mit drei über den Umfang gleichmäßig verteilten Schlitzen 6 versehen, die von der Stirnseite 3 nach hinten verlaufen und bei einem ungeschlitzten Ringbereich 7 enden. Ein vor dem Ringbereich 7 befindliches Schlitzlangstück ist als Verbreiterung 8 ausgebildet. Die Spannzange 4 bildet vorne bei der Stirnseite 3 nach innen hin drei Spannbacken 9, die eine Aufnahmebohrung 10 begrenzen und im Bereich der Spannbacken nach außen hin einen Konus 11 bilden, der sich von der Stirnseite 3 weg nach hinten verjüngt. Außen auf der Spannzange 4 sitzt umfassend eine Spannhülse 12, die innen einen Konus 13 bildet, der gegen den Konus 11 der Spannzange drückt. Die Spannhülse 12 wird von einem Spannrohr 14 beaufschlagt, das mit einer nicht gezeigten Einrichtung in Richtung vor zur Stirnseite 3 drückbar ist, um ein Spannen eines nicht gezeigten Werkstückes mittels der Spannzange 4 zu bewirken.

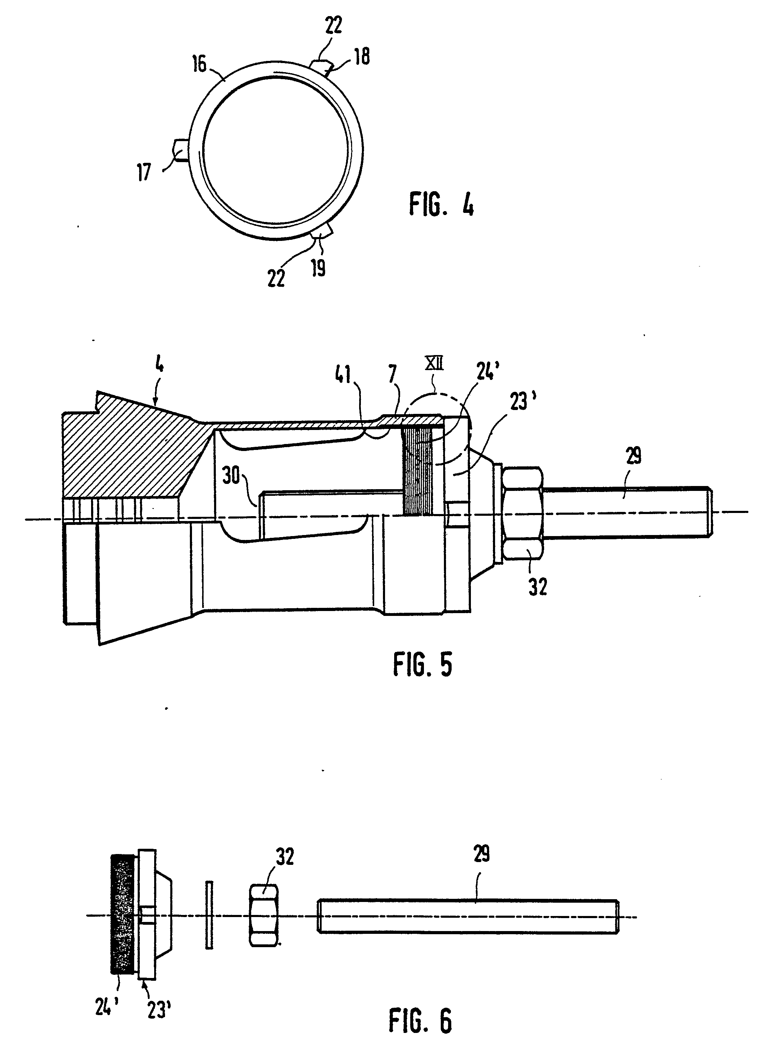

Es ist eine Einsatzmutter 16 vorgesehen, die ein mit Innengewinde versehenes, außen rundes Ringgebilde ist, das drei radial nach außen ragende, gleichmäßig über den Umfang verteilte Nasen 17, 18, 19 einstückig aufweist. Die Einsatzmutter 16 ist am hinteren Ende der Schlitze 6 angeordnet und die Nasen 17, 18, 19 liegen am hinteren Grund 20 der Schlitze an. Da die Schlitze 6 nach hinten hin die Verbreiterung 8 bilden, können die Nasen 17, 18, 19 in Umfangsrichtung entsprechend breit sein, wodurch die Festigkeit der Nasen verbessert ist. Die Nasen 17, 18, 19 weisen in Achsrichtung die gleiche Breite wie die Einsatzmutter 16 auf. Der Außendurchmesser der Einsatzmutter 16 ist beiderseits um eine Lücke 21 kleiner als der Innendurchmesser der Spannzange 4. Gemäß Fig. 4 sind die zwei Nasen 18, 19 mit einer Abschrägung 22 versehen, wobei die beiden Abschrägungen parallel zueinander verlaufen und der Abstand der beiden Abschrägungen voneinander geringfügig, z.B. 0,5 mm, größer ist als der Außendurchmesser der Einsatzmutter 16.

In die Einsatzmutter 16 ist ein napfartiges Einsatzstück 23 mit einem länglichen Gewindebereich 24 geschraubt, der in Achsrichtung mindestens doppelt so lang ist wie die Einsatzmutter breit ist. Der Gewindebereich 24 geht über eine radial nach außen gerichtete Stufe in einen Führungsbereich 42 über, der genau passend oder mit Spiel im Ringbereich 7 der Spannzange 4 sitzt und zusammen mit dem Gewindebereich die Wandung des Napfes bildet. Im Anschluß an den Führungsbereich 42 bildet das Einsatzstück 23 mit einem Endbereich 25 eine radial nach außen gerichtete Stufe 26, die ein Rückende 27 der Spannzange 4 hintergreift. Der Endbereich 25 ist mit über den Umfang verteilten, sich axial erstreckenden Eingriffsnuten 28 versehen. Das Einsatzstück 23 befindet sich mit dem den Grund des Napfes bildenden Endbereich 25 außerhalb der Spannzange 4.

Durch den Endbereich 25, d.h. durch den Napfgrund, ragt mittig angeordnet eine Stange 29, die im Einsatzstück 23 einen Anschlag 30 bildet. Die Stange 29 ist bei der in Fig. 1 oberhalb der Mittellinie dargestellten Ausführungsform mit einem äußeren Gewinde 31 in ein inneres Gewinde im Endbereich 25 des Einsatzstückes 23 geschraubt, so daß sich die Position des Anschlages 30 durch Drehen der Stange 29 verändern läßt. Außerhalb der Spannzange 23 sitzt auf der Stange 29 eine Kontermutter 32, die gegen den Endbereich 25 geschraubt ist und die Stange festlegt.

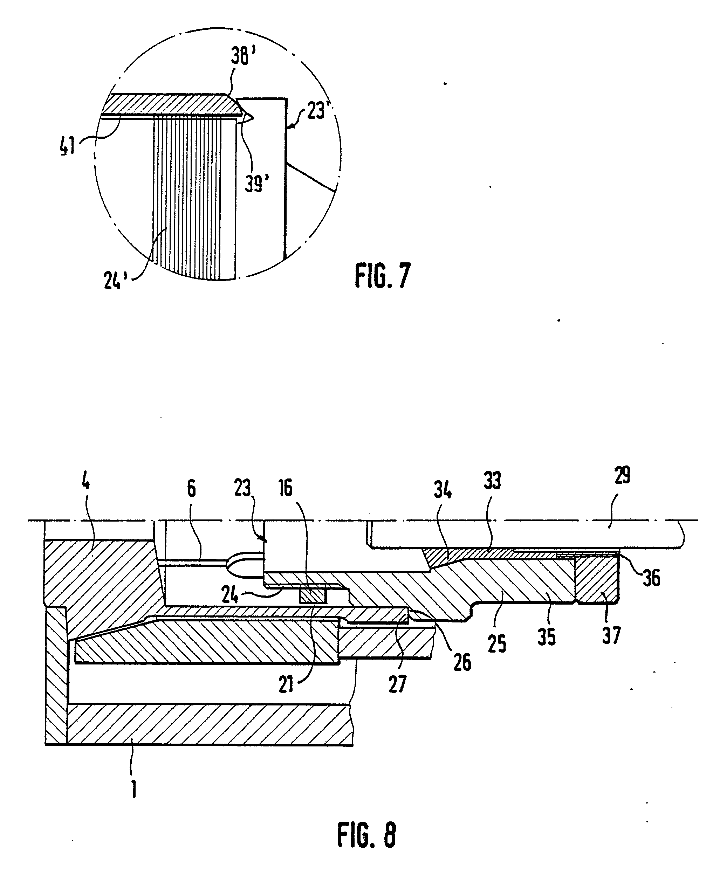

Bei der in Fig. 8 unterhalb der Mittellinie dargestellten Ausführungsform sitzt die außen glatte Stange 29 in einer geschlitzten Hilfsspannzange 33, die über Konus 34 mit dem Grund bzw. dem Endbereich 25 des Einsatzstückes 23 zusammenwirkt. Das Einsatzstück 23 weist am Endbereich 25 einen axial nach hinten ragenden Rohransatz 35 auf, der die Hilfsspannzange 33 aufnimmt. Die Hilfsspannzange 33 ragt aus dem Rohransatz 35 mit einem Gewindebereich 36, auf dem eine Spannmutter 37 sitzt, welche die Hilfsspannzange betätigt.

Obgleich es prinzipiell auch möglich wäre, die Stufe 26 und das daran anliegende Rückende 27 der Spannzange mit zur Achse der Spannvorrichtung senkrechten Anlageflächen zu versehen, ist für die Praxis im allgemeinen die gezeigte und in Fig. 3 besonders herausgestellte konische Ausbildung der Anlageflächen von ganz entscheidender Bedeutung. Das Rückende 27 ist dabei mit einer Konusfläche 38 versehen, die an einer Gegenkonusfläche 39 einer Ringnut 40 in der nach außen gerichteten Stufe 26 anliegt. Beim Einschrauben des Einsatzstücks 23 in die Einsatzmutter 16 wird durch diese konischen Flächen 38, 39 ein radialer Druck auf das Ende der Spannzange ausgeübt, so daß ansonsten zu befürchtende Ausdehnungen durch einen rein axial gerichteten Druck daraus resultierende Unwuchtigkeiten vermieden werden. Ganz entscheidend dabei ist aber, daß durch diese sich einstellende Klemmwirkung eine Sicherung der lösbaren Halterung des Einsatzstücks 23 sowohl für Rechts- als auch Linkslauf der Drehmaschine gegeben ist.

Die Ausführungsform nach den Figuren 5 bis 7 unterscheidet sich von der bevorzugten Ausführungsform nach den Figuren 1 bis 4 lediglich dadurch, daß anstelle der besonderen Einsatzmutter hier das Gegengewinde 41 zum Einschrauben des Einsatzstücks 23′ mit seinem Außengewinde 24′ unmittelbar auf der Innenseite des ungeschlitzten Ringbereichs 7 vorgesehen ist. Bei dieser Art der Ausbildung ist dann auch eine napfartige Ausbildung des Einsatzstücks 23′ nicht erforderlich, sondern dieses einsatzstück 23′ kann blockförmig ausgebildet sein. Im übrigen ist die Ausbildung völlig gleichartig, wie bei der Spannvorrichtung nach den Figuren 1 bis 4, d.h. es ist auch hier wiederum eine Konusspannung mit den genannten Konusflächen 38, 39 vorgesehen. Abweichend von der Ausbildung nach den Figuren 1 bis 3 sind dabei nicht gleichartige Kegelflächen als Konusflächen vorgesehen, sondern konvex gekrümmte Flächenbereiche 38′ und 39′.

Die Erfindung ist nicht auf die dargestellten Ausführungsbeispiele beschränkt. Insbesondere wäre es beispielsweise auch möglich, den Anschlag 30 auch als federnden Auswerferbolzen auszubilden.

## Ansprüche

1. Spannvorrichtung zum Spannen eines Werkstückes an einer Drehmaschine, insbesondere NC-Drehmaschine, bei der eine geschlitzte Spannzange mit einer Stirnseite an einem Flansch eines Spindelstockes anliegt und über Konus von einer axial bewegbaren Spannhülse beaufschlagt ist und bei der an der Stirnseite Spannbacken eine Aufnahmebohrung begrenzen, die Schlitze sich weit über die Spannbacken hinaus erstrecken und sich an die Schlitze ein ungeschlitzter Ringbereich anschließt, dadurch gekennzeichnet, daß ein mit Abstand hinter den Spannbacken (9) in der Spannzange (4) angeordnetes Einsatzstück (23), das einen zur Aufnahmebohrung (10) koaxialen, vorzugsweise verstellbaren Anschlag (30) für das Werkstück trägt, lösbar am ungeschlitzten Ringbereich befestigbar ist, indem das in ein Gegengewinde einschraubbare Einsatzstück (23) sich mit einer radialen Stufe (26) am der Stirnseite (3) gegenüberliegenden Rückende (27) der Spannzange abstützt.

2. Spannvorrichtung nach Anspruch 1, dadurch gekennzeichnet, daß die radiale Stufe eine eine konische Gegenfläche am Rückende (27) umfassende und radial klemmend beaufschlagende konische Zentrierringnut (40) aufweist.

3. Spannvorrichtung nach Anspruch 1 oder 2, dadurch gekennzeichnet, daß das Einsatzstück (23) in den mit einem Innengewinde versehenen ungeschlitzten Ringbereich einschraubbar ist.

4. Spannvorrichtung nach einem der Ansprüche 1 bis 3, dadurch gekennzeichnet, daß das Einsatzstück (23) in eine am ungeschlitzten Ringbereich (7) befestigte Einsatzmutter (16) eingeschraubt ist.

5. Spannvorrichtung nach Anspruch 4, dadurch gekennzeichnet, daß die Einsatzmutter (16) mit radialen Nasen (15, 17, 18) in die Schlitze (6) der Spannzange (4) ragt, die sich beim Einschrauben - unter Verklemmung des ungeschlitzten Ringbereichs zwischen den Nasen und der radialen Stufe - gegen den Grund (20) der Schlitze (6) legen.

6. Spannvorrichtung nach einem der Ansprüche 1 bis 5, dadurch gekennzeichnet, daß das Einsatzstück (23) napfartig mit einem offenen Endstück und einem geschlossenen Ende ausgebildet mit dem offenen Endstück (24) in das Einsatzgewinde, insbesondere der Einsatzmutter, eingeschraubt ist und am geschlossenen Ende (25) den Anschlag (30) trägt.

7. Spannvorrichtung nach Anspruch 6, dadurch gekennzeichnet, daß das geschlossene Ende (25) des Einsatzstückes (23) außerhalb der Spannzange (4), hinter deren Rückende (27) angeordnet ist.

8. Spannvorrichtung nach einem der Ansprüche 5 bis 7, dadurch gekennzeichnet, daß die drei Nasen (17, 18, 19) mit der Einsatzmutter (16) einstückig sind, daß der Außendurchmesser der Einsatzmutter (16) etwas geringer ist als der Innendurchmesser der Spannzange im ungeschlitzten Ringbereich (7) und im anschließenden geschlitzten Bereich und daß zwei der Nasen (18, 19) jeweils mit einer Abschrägung (22) zum Einschub der schräggestellten Einsatzmutter (16) in den ungeschlitzten Ringbereich (7) versehen sind.

9. Spannvorrichtung nach einem der Ansprüche 1 bis 8, dadurch gekennzeichnet, daß ein die Stufe (26) bildender Endbereich (25) des Einsatzstückes (23) an der Außenseite axial verlaufende Eingriffsnuten (28) aufweist.

10. Spannvorrichtung nach einem der Ansprüche 1 bis 9, dadurch gekennzeichnet, daß der Anschlag (30) an einer Stange (29) vorgesehen ist, die relativ zum napfartigen Einsatzstück (23) axial verstellbar ist und an diesem mittels Feststellmutter (32, 37) festlegbar ist.

11. Spannvorrichtung nach einem der Ansprüche 1 bis 10, dadurch gekennzeichnet, daß die Stange (29) in ein Gewinde im Grund am geschlossenen Ende (25) des napfartigen Einsatzstückes (23) eingeschraubt (31) und eine gegen das Rückende (27) drückende Kontermutter (32) trägt.

12. Spannvorrichtung nach einem der Ansprüche 1 bis 11, dadurch gekennzeichnet, daß die Stange (29) in einer geschlitzten Hilfsspannzange (33) sitzt, die über Konus (34) am Grund (25) des napfartigen Einsatzstückes (23) abgestützt ist und eine gegen das Rückende (27) drückende Spannmutter (37) trägt.

FIG. 1

FIG. 2

FIG. 3

FIG. 4

FIG. 5

FIG. 6

FIG. 7

FIG. 8